# EUROPEAN PATENT APPLICATION

(11) **EP 4 403 956 A1**
(43) Date of publication of application: **24.07.2024**
(21) Application number: 24150812.6
(22) Date of filing: 09.01.2024
(51) Int. Cl.: G01S 7/481, G01S 17/48

(54) **TRIANGULATION SENSOR WITH NEAR-ZONE DETECTION**

(30) Priority: 18.01.2023 US 202318156230
(71) Applicant: Datalogic IP TECH S.r.l., 40012 Lippo di Calderara di Reno (BO) (IT)
(72) Inventor: LODDO, Riccardo, I-40050 Monte San Pietro (BO) (IT); MESTIERI, Marco, I-40018 San Pietro in Casale (BO) (IT)
(74) Representative: Porta & Consulenti Associati S.p.A.

(57) **Abstract**

A proximity sensor includes a triangulating optical arrangement and a non-triangulating optical arrangement. The triangulating optical arrangement has a blind zone near a primary photosensor, whereas the non-triangulating arrangement is able to detect objects within the blind zone using a secondary photosensor which works with a common illumination source as the triangulating optical arrangement.

## Description

### TECHNICAL FIELD

The present disclosure generally relates to automated optical sensing and, more particularly, to triangulation sensors.

### BACKGROUND

Photosensors are widely used in industry to detect objects in proximity of the sensors. There are myriad applications, including in the fields of material handling, robotics, industrial machinery, transportation, safety, and many others. By way of example, one such application involves detection of moving objects along a conveyor belt.

Usually, in such applications, a triangulation-based sensor, such as a background-suppression (BGS) sensor, is used in which light is emitted from a transmitter and is focused or directed towards a region into which object may move. The light reflects off of a surface of the object (and background) and is detected by a photosensor (e.g., position sensitive detector, (PSD), CMOS, CCD, photodiode array, or the like). The location of the light impinging on the photosensor may vary with the distance to the object in a predictable manner, thus providing a measure of the object's proximity.

Triangulation-type sensors are generally designed to detect objects at a range of distances. Typically, a BGS sensor that can detect objects at some distance from the sensor is not capable of detecting objects that are very close to the sensor. Such near-zone blind spots exist because the light reflected from the object is directed onto the photosensor at a progressively greater offset angle from the optical axis of the detector when the object is closer to the photosensor. At the near boundary of the sensor's range, the offset angle of the incoming reflected light is beyond the periphery of the photosensor.

Some triangulation-type sensors utilize a secondary photosensor that is placed at a greater distance from the light transmitter. This approach requires a greater footprint for the sensor than the space available in the housing of the end-use application.

Another approach for facilitating near-zone object detection utilizes a second light transmitter in the triangulation-type sensor, which is positioned closer to the photosensor than the primary transmitter, thus reducing the offset angle from the optical axis of the photosensor. This approach produces two illumination spots, which may be confusing and undesirable for users. Also, since at certain measurement distances both spots may be visible to the photosensor, some way of distinguishing among the two spots may be needed, such as operating the transmitters one at a time. This technique would reduce the detection speed of the sensor.

The inventors have appreciated that a practical solution is needed to address these, and other, challenges in photosensor-based measurement systems.

### SUMMARY

In a first aspect thereof, the present invention relates to a proximity sensor comprising a triangulating optical arrangement including an illumination source, a primary photosensor spaced apart from the illumination source, and corresponding primary optics arranged to direct light from the illumination source to a target area such that light from the illumination source reflected from an object at the target area is monitored by the primary photosensor and received at a portion of the photosensor. That portion of the photosensor varies based on the distance between the proximity sensor and the object, and the triangulating optical arrangement has a primary working range above a minimum distance and a blind zone below the minimum distance.

The proximity sensor further comprises a non-triangulating optical arrangement including a secondary photosensor and corresponding secondary optics directed at the target area such that the light from the illumination source reflected from the object in at least a portion of the target area is monitored by the secondary photosensor, and the non-triangulating optical arrangement has a secondary working range that includes at least a portion of the blind zone.

Preferably, the proximity sensor further comprises controller circuitry interfaced with the illumination source and with the first and the second photosensors, the controller circuitry operative to:
- read distance measurement information as measured by the primary photosensor, the distance measurement information corresponding to the target area monitored by the photosensor;
- read a detection measurement made by the secondary photosensor;
- computationally determine any presence of at least a portion of an object within the primary working range in the target area, wherein the determination of the presence within the primary working range is based on the distance measurement information;
- in an absence of any portion of an object within the primary working range in the target area, computationally determine any presence of at least a portion of an object within the secondary working range, wherein the determination of the presence within the secondary working range is based on the detection measurement.

Preferably, the controller circuitry is further operative to computationally determine any presence of an obstruction of the proximity sensor based on the detection measurement.

Preferably, the controller circuitry is further operative to computationally determine a property of the object based on a combination of the distance measurement information and on the detection measurement.

Preferably, the secondary working range includes the entire blind zone.

Preferably, the secondary optics include a light guide.

Preferably, the light guide comprises a light pipe.

Preferably, the light guide comprises an entry surface having an angled surface aligned normal to the target area.

Preferably, the primary photosensor is spaced apart from the illumination source by a spacing distance, and the secondary photosensor is situated within the spacing distance.

Preferably, the primary photosensor comprises a set of position-sensitive photoelectric elements, and the secondary photosensor is a non-position-sensitive photosensor.

Preferably, the primary optics comprise an illumination lens aligned with the illumination source, and a receiving lens aligned with the primary photosensor.

Preferably, the primary optics are integrally formed with the secondary optics.

Preferably, the illumination source, the primary photosensor, and the secondary photosensor are assembled as a unitary module.

In a second aspect thereof, the present invention relates to a method for operating a proximity sensor, the method comprising: directing light, by a triangulating optical arrangement, from an illumination source to a target area such that light from the illumination source is reflected from an object at the target area; monitoring the target area by a primary photosensor that is spaced apart from the illumination source, wherein the primary photosensor has a primary working range above a minimum distance and a blind zone below the minimum distance; and monitoring the target area by a non-triangulating optical arrangement including a secondary photosensor and corresponding secondary optics directed at the target area such that the light from the illumination source reflected from the object in at least a portion of the blind zone area is monitored by the secondary photosensor.

Preferably, the method further comprises:
- reading distance measurement information as measured by the primary photosensor, the distance measurement information corresponding to the target area monitored by the photosensor;
- reading a detection measurement made by the secondary photosensor;
- computationally determining any presence of at least a portion of an object within a primary working range in the target area, wherein the determining of the presence within the primary working range is based on the distance measurement information;
- in an absence of any portion of an object within the primary working range in the target area, computationally determining any presence of at least a portion of an object within a secondary working range that includes the blind zone, wherein the determination of the presence within the secondary working range is based on the detection measurement.

Preferably, the method further comprises computationally determining any presence of an obstruction of the proximity sensor based on the detection measurement.

Preferably, the method further comprises computationally determining a property of the object based on a combination of the distance measurement information and on the detection measurement.

Preferably, monitoring the target area by the non-triangulating optical arrangement includes guiding the light from the illumination source that is reflected from the object at the target area to the secondary photosensor by a light pipe.

Preferably, monitoring the target area by the non-triangulating optical arrangement includes monitoring the entire blind zone.

In a further aspect thereof, the present invention relates to a proximity sensor, comprising:
- means for directing light from an illumination source to a target area such that light from the illumination source is reflected from an object at the target area;
- means for monitoring the target area by a primary photosensor that is spaced apart from the illumination source, wherein the primary photosensor has a primary working range above a minimum distance and a blind zone below the minimum distance; and
- means for monitoring the target area by a secondary photosensor arranged such that the light from the illumination source reflected from the object in at least a portion of the blind zone area is monitored by the secondary photosensor.

In a further aspect thereof, the present invention relates to an apparatus comprising means to implement any of the features of the method described above.

In a further aspect thereof, the present invention relates to a system to implement any of the features of the method described above.

### BRIEF DESCRIPTION OF THE DRAWINGS

FIG. 1 is a schematic diagram illustrating a proximity sensor arrangement utilizing a background-suppression sensor (BGS) according to various embodiments of the present invention.
FIG. 2 is a simplified optical diagram illustrating an example proximity sensor arrangement's optical system according to one example of the present invention.
FIG. 3 is a block diagram illustrating a proximity sensor such as the one of FIG. 2 with additional components.
FIG. 4 is a high-level flow diagram illustrating basic operation of a proximity sensor, such as the proximity sensor of FIG. 1 or FIG. 3.
FIG. 5 is a flow diagram illustrating an operating process of a proximity sensor according to the present invention in which the secondary photosensor is read conditionally based on an assessment of the primary photosensor.
FIG. 6 is a graph depicting performance of a proximity sensor, including a primary photosensor and corresponding optical system, and a secondary photosensor and corresponding optical system, to reflected illumination light from objects at various distances according to some embodiments of the present invention.

### DETAILED DESCRIPTION

The illustrations included herewith are not meant to be actual views of any particular systems, memory device, architecture, or process, but are merely idealized representations that are employed to describe embodiments herein. Elements and features common between figures may retain the same numerical designation except that, for ease of following the description, for the most part, reference numerals begin with the number of the drawing on which the elements are introduced or most fully described. In addition, the elements illustrated in the figures are schematic in nature, and many details regarding the physical layout and construction of a memory array and/or all steps necessary to access data may not be described as they would be understood by those of ordinary skill in the art.

As used herein, the singular forms "a," "an," and "the" are intended to include the plural forms as well, unless the context clearly indicates otherwise.

As used herein, "or" includes any and all combinations of one or more of the associated listed items in both, the conjunctive and disjunctive senses. Any intended descriptions of the "exclusive-or" relationship will be specifically called out.

As used herein, the term "configured" refers to a structural arrangement such as size, shape, material composition, physical construction, logical construction (e.g., programming, operational parameter setting) or other operative arrangement of at least one structure and at least one apparatus facilitating the operation thereof in a defined way (e.g., to carry out a specific function or set of functions).

As used herein, the phrases "coupled to" or "coupled with" refer to structures operatively connected with each other, such as connected through a direct connection or through an indirect connection (e.g., via another structure or component).

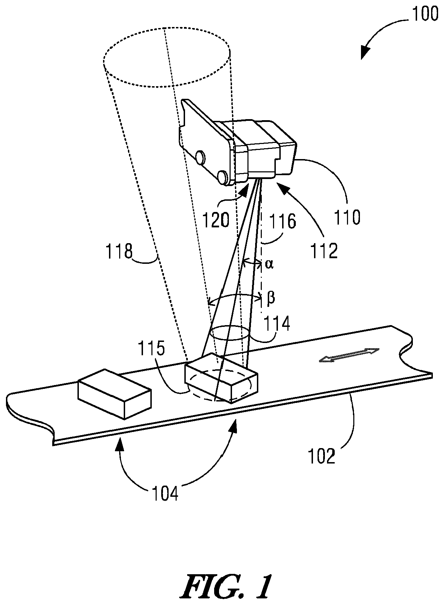

FIG. 1 is a schematic diagram illustrating a proximity sensor arrangement 100 utilizing a background-suppression sensor (BGS) according to various embodiments of the present invention. Proximity sensor 110 is arranged as a diffuse-mode sensor that illuminates target area 115 and measures light that is reflected from target area 115 to measure the distance to object(s) 104. Accordingly, proximity sensor 110 includes illumination source 112, which may be a LED-based emitter, a laser emitter, or other suitable light source, and optical system to direct transmitted light 114 to target area 115.

As depicted, proximity sensor 110 is a mounted (fixed-position) detector which is directed toward surface 102 such as a conveyor belt, for example. In other embodiments, the object detector may be movable, such as hand-held device, or it may be mounted to a movable structure, such as a vehicle, robotic arm, moving platform, or other machine. In other applications, proximity sensor 110 is not strictly used to detect objects, but rather to measure distance to a surface or structure. Therefore, the principles of the proximity sensor's 110 operation described herein are applicable to myriad other applications.

As shown in FIG. 1, transmitted light 114 is directed through an exit window such as a protective window (not shown) of the proximity sensor 110 at angle α that is offset from perpendicular 116 of the surface of conveyor belt 102. The transmitted light 114 reflects from target area 115, with diffuse-reflected light traveling in many different directions (not shown for clarity of illustration), and specular-reflection 118 being reflected at offset angle β from transmitted-light angle α. Offset angle β depends on transmitted-light angle α and on the orientation of the surface(s) of object 104 from which the specular reflection occurs.

In addition, proximity sensor 110 includes an optical receiving system 120. In some embodiments, as described in greater detail below, optical receiving system 120 includes primary and secondary photosensors, and beam-shaping components.

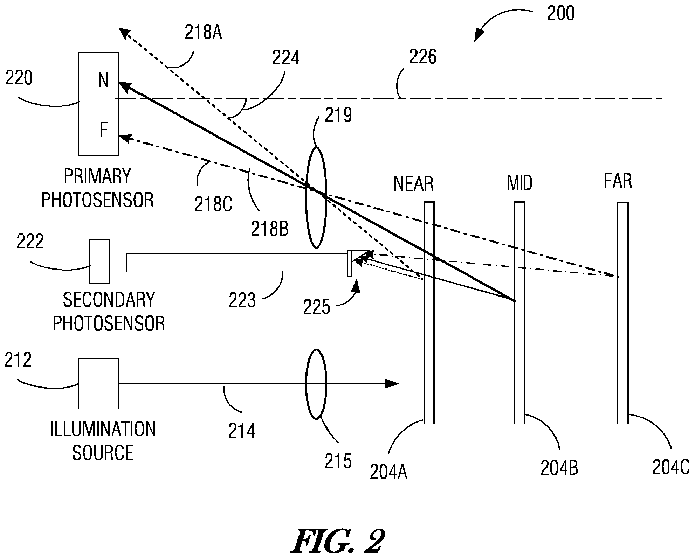

FIG. 2 is a simplified optical diagram illustrating an example proximity sensor arrangement's optical system 200 according to one example of the present invention. Optical system 200 includes illumination source 212, illumination lens 215, primary photosensor 220, secondary photosensor 222, receiving lens 219, and light guide 223.

Illumination source 212 may be a laser, LED emitter, or other suitable light source. Primary photosensor 220 may include a set of position-sensitive photoelectric elements. For example, primary photosensor 220 may include a PSD, a linear array, or a 2-D array (e.g., dual-PSD, CMOS or CCD image sensor). Secondary photosensor 222 may be a similar photosensor in some embodiments, or it may be a simpler photosensor, such as a non-position-sensitive photodetector, in other embodiments.

Optical system 200 is arranged to measure distance to objects that may be situated near illumination source 212 at 204A, at an intermediate distance 204B, or at a far distance 204C. In operation, illumination source 212 transmits light beam 214 into the sensor's field of view, which is directed through illumination lens 215. Transmitted beam 214 reflects off of the object's surface. Reflected beam 218A, 218B, or 218C, corresponding to the near, intermediate, or far distances 204A, 204B, or 204C, respectively, is directed through receiving lens 219 to primary photosensor 220, and through light guide 223 to secondary photosensor 222.

The position of light impingement on photosensor 220 is correlated to the distance of the surface 204A, 204B, 204C by a known relationship, such as a hyperbolic function, which depends on the optical components and their arrangement. Notably, reflected beam 218B or 218C at the intermediate and far distances, respectively, reaches primary photosensor 220, but reflected beam 218A from the near distance, does not reach primary photosensor 220 because its incident angle 224 relative to optical axis 226 is so great that reflected beam 218A lands beyond the periphery of primary photosensor 220. In this arrangement, optical system 200 has a lower range limit that, when exceeded, i.e., an object is closer to the proximity sensor than the lower range limit, primary photosensor 220 cannot detect the presence of the object.

For reflected beams 218B or 218C that reach photosensor 220, photosensor 220 can discern the position of the reflected beam 218B 218C that is focused onto the photosensor. For instance, reflected beam 218B from a surface at intermediate distance 204B impinges at one side of photosensor 220 (as indicated at N); whereas reflected beam 218C from a surface at far distance 204C impinges at another side of photosensor 220 (as indicated at F).

Secondary photosensor 222 and light guide 223 are arranged to detect light reflecting from objects at any practical distance (up to a practical maximum distance limit that depends on the sensitivity of secondary photosensor 222, reflected light intensity, and ambient conditions such as dust or fog). Light guide 223 may be implemented as a light pipe, fiber-optic bundle, or other structure, that directs light reflected off of an object within the proximity sensor' field of view to secondary photosensor 222 regardless of the distance to that object. In related embodiments, light guide 223 has a specifically-formed entry surface 225, such as an angled or faceted surface, which is oriented at a predefined inclination to the optical axis to optimize capture of the light reflected from the object, and reduce light interference from other directions.

In a related type of implementation, one or both of primary photosensor 220 and secondary photosensor 222 is able to discern the intensity of the received reflected beam, which may be measured or assessed in terms of received power, received energy over a monitoring duration, or sensor output amplitude (voltage or current).

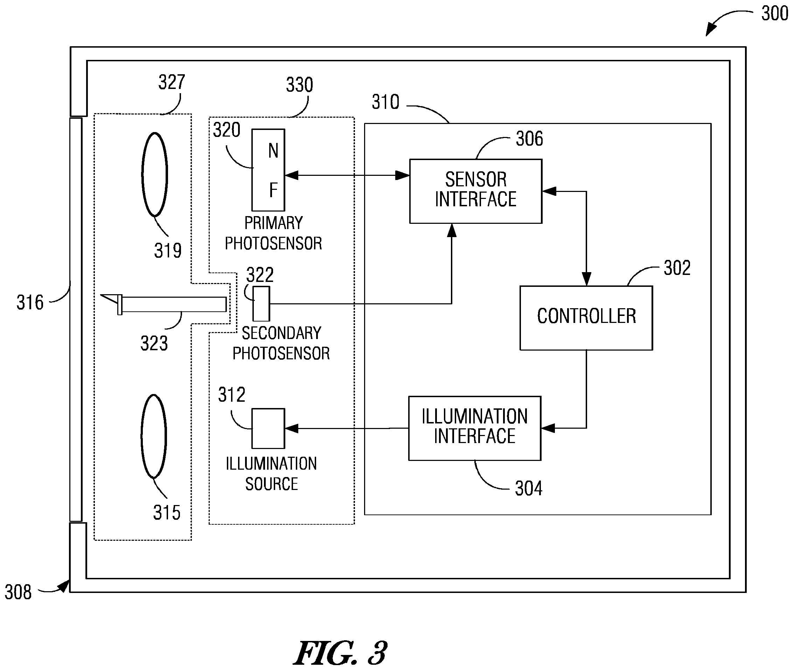

FIG. 3 is a block diagram illustrating a proximity sensor with additional components according to some embodiments of the present invention. Proximity sensor 300 may be an implementation of proximity sensor 110 (FIG. 1) according to some embodiments of the present invention. As depicted, proximity sensor 300 includes illumination source 312, illumination lens 315, primary photosensor 320, receiving lens 319, secondary photosensor 322, and light guide 323, which function similarly to the similarly-numbered counterpart components as described above with reference to FIG. 2.

In some embodiments of the present invention, primary photosensor 320, secondary photosensor 322, and illumination source 312 are assembled as a unitary transducer module 330. In various implementations transducer module 330 may be a circuit card assembly or integrated circuit (IC) package. In related embodiments of the present invention, receiving lens 319, light guide 323, and illumination lens 315 are integrated into a unitary optical module 327, which may be formed from glass, thermoplastic (e.g., polycarbonate or other transparent material), transparent ceramic, or other suitable material that passes wavelengths of interest. Receiving lens 319, light guide 323, and illumination lens 315 are aligned, respectively, with primary photosensor 320, secondary photosensor 322, and illumination source 312 when transducer module 330 and optical module 327 are assembled together as part of proximity sensor 300.

In related embodiments of the present invention, illumination source 312 and primary photosensor 320 are relatively situated in a spaced relationship. As a general rule, the spacing apart of primary photosensor 320 and illumination source 312 facilitates the triangulation gain of the proximity sensor; therefore, from a performance standpoint, it is preferable to have these components situated as far apart from one another as practical given the geometry constraints of the sensor's housing. Secondary photosensor 322 may be placed in the space between primary photosensor 320 and illumination source 312 to permit the latter two components to have maximum spacing from one another and increase the triangulation gain.

Proximity sensor 300 further includes housing 308, protective window 316 and control circuitry 310. Protective window 316 serves as a portion of housing 308, and is situated over optical components 315, 319, and 323 to permit light to be transmitted from and to transducers 312, 320, and 322 to and from the exterior of housing 308. Protective window 316 may be formed from glass, thermoplastic, transparent ceramic material, or other suitable transparent material. In a related embodiment (not shown), protective window 316 is integrated with optical module 327.

Control circuitry 310 includes controller 302, illumination interface 304, and sensor interface 306. Controller 302 is interfaced with illumination source 312 via illumination interface 304. Also, controller 302 is interfaced with primary photosensor 320 and secondary photosensor 322 via sensor interface 306. Controller 302, illumination interface 304, and sensor interface 306 may be assembled as a unitary electronics module, such as a circuit card assembly or IC. In related embodiments of the present invention, control circuitry 310 may contain, or be mechanically coupled to, illumination source 312, primary photosensor 320, and secondary photosensor 322, or to transducer module 330, where applicable. In other embodiments of the present invention, control circuitry 310 may be spaced apart from illumination source 312, primary photosensor 320, or secondary photosensor 322, while still being operatively coupled (e.g., via electrical connection) with those devices.

In some embodiments of the present invention, controller 302 may include circuitry such as a microcontroller device (e.g., a microprocessor core, memory, non-volatile storage, input/output ports, etc.) that is operative to execute program instructions. In other embodiments, controller 302 includes hardwired or (re)programmable digital logic circuitry (e.g., field-programmable gate array (FPGA), application-specific integrated circuit (ASIC), programmable logic device (PLD), complex PLD (CPLD), programmable array logic (PAL)) that is hardwired, programmed, or re-programmable, to execute logical operations equivalent to the program instructions of microprocessor-based implementations.

Illumination interface 304 may include a driver circuit (e.g., transistor-based amplifier) to supply sufficient power to illumination source 312 and to facilitate switching or other type of modulation of illumination source 312. In some implementations, illumination interface 304 includes a digital-to-analog (D/A) circuit that is suitably interfaced with controller 302 (e.g., via address and data busses, via serial port), and which supplies a variable-voltage signal to the driver circuit such that the intensity of illumination source 312 may be varied under the command of controller 302.

Sensor interface 306 may include suitable interface circuitry for receiving signaling from primary photosensor 320 and secondary photosensor 322. Such interface circuitry may include switching circuitry for reading groups, subgroups, or individual photosensor devices (e.g., row/column selection switches), as well as signal-conditioning (e.g., small-signal amplification) circuitry, and analog-to-digital (A/D) circuitry that converts the photosensor output to a digital format readable by controller 302. Sensor interface 306 may include two-way communications to facilitate device/array selection commands from controller 302.

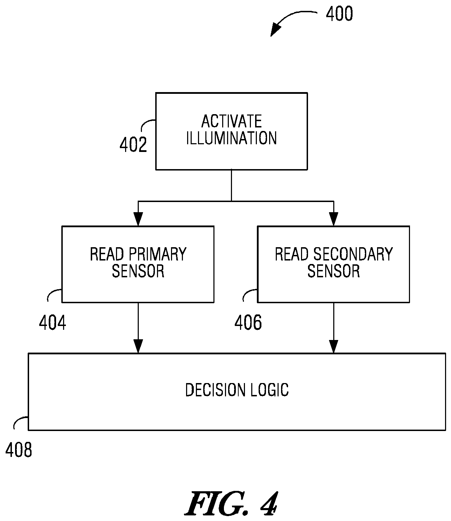

FIG. 4 is a high-level flow diagram illustrating basic operation of a proximity sensor, such as proximity sensor 110 (FIG. 1) or proximity sensor 300 (FIG. 3) according to some embodiments of the present invention. Operational process 400 of a proximity sensor is described with reference to the components ofproximity sensor 300 for illustration; however, process 400 may likewise be carried out by variations of the embodiments described above.

At 402, controller 302 activates illumination source 312, which may transmit a laser spot or project other illumination into a target area within the field of view of the sensor's optics. At 404, controller 302 reads primary photosensor 320. Reading of primary photosensor 320 may involve determining the location of photosensor 320 which receives the greatest optical flux. In addition, reading of photosensor 320 may include a measurement of the received illumination power, which may be electrically measured as volts or amperes, for instance. At 406, secondary sensor 322 is read by controller 302.The reading of secondary sensor 322 may simply involve measuring the received illumination intensity. The readings of the primary and secondary photosensors are passed to decision logic, which is executed by controller 302 at 408.

In some embodiments of the present invention, decision logic 408 may include comparing the received illumination power measurements from each of the photosensors, primary and secondary, to respective thresholds. If a given threshold is not met by a given measurement value, that measurement may be disregarded as insufficient. Notably, as described below, the primary and the secondary photosensors and their respective optical systems are constructed and arranged such that the primary and secondary photosensors are sensitive to reflected light from objects in the field of view of the proximity sensor at different distances. Generally, primary photosensor 320 is receptive to reflected light from objects beyond a certain minimal distance, such as around 40 mm, for example, up to some limit beyond which the intensity of the received reflected light power is below the corresponding threshold for the primary photosensor. Secondary photosensor 322 is sensitive to reflected light from essentially zero to some upper range limit beyond which the intensity of the received reflected light power is below the corresponding threshold for the secondary photosensor. Notably, secondary photosensor 322 is receptive to reflected light in the close range where the primary photosensor is not receptive.

Application of the decision logic at 408 may further involve determining the distance to a detected object if that object is detected by primary photosensor 320 and, if such is the case, the distance to the object may be determined based on the location of greatest activation of the primary photosensor as in a conventional proximity sensor having only a single photosensor. If no object is detected by primary photosensor 320, decision logic 408 may determine if the object is detected by secondary photosensor 322 and, if such is the case, the decision logic 408 may return an indication that an object is within the near zone of the proximity sensor.

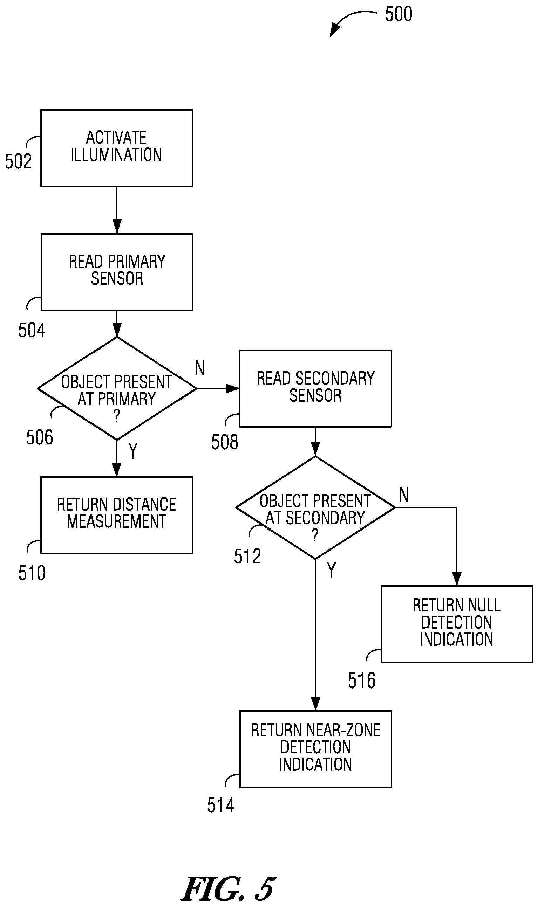

FIG. 5 is a flow diagram illustrating operating process 500 of a proximity sensor according to an embodiment of the present invention in which the secondary photosensor is read conditionally based on an assessment of the primary photosensor. Process 500 may be carried out by proximity sensor 110 or 300. At 502, illumination is activated. At 504, the primary photosensor is read. At 506, the primary photosensor's reading is compared against a corresponding threshold. If the threshold is exceeded, an object is considered to be detected within the detection range of the proximity sensor and the process advances to 510, where distance to the object is returned based on the localized activation of the primary photosensor.

If the threshold at 506 is not met, no object is considered to be present within the sensitivity range of the primary photosensor, but it is possible that the object is too close to be detected by the primary photosensor. Accordingly, the process advances to 508, where the secondary photosensor is read. At 512, the signal received by the secondary photosensor is compared against a corresponding threshold to determine if it is strong enough to be considered a reflection from an object. In the affirmative case, an indication that an object is in the near zone of the proximity sensor is returned at 514. This indication may be a binary indication. Otherwise, if the threshold at 512 is not met, an indication of no detection (or no indication of detection) is returned at 516.

In a related embodiment of the present invention, in addition to a binary indication of detection, the secondary photosensor's measurement may be assessed in combination with the primary photosensor's measurement to extract additional information about the object or the proximity sensor. For example, when an object is within range of the primary photosensor and the distance to that object is determined based on the primary photosensor's measurement, a signal intensity of the second photosensor may be indicative of a surface orientation, object size, or surface characteristic, such as color or reflectance, of the object. Thus, if certain characteristics of the object are known *a priori,* a lookup table may be stored at controller 302 that relates signal strength at the secondary photosensor to measured distance by the primary photosensor, to one or more object property.

In a related embodiment of the present invention, the measured signal strength at the secondary photosensor, optionally in combination with measurements of the primary photosensor, may be indicative of obstructions of the proximity sensor, such as dust, dirt, smudges, scratches, or the like, of the protective window. Accordingly, in one example, if the secondary photosensor indicates a received signal level in a known absence of an object, that signal may be due to scattering of the illumination caused by the obstruction. Controller 302 may be programmed to read the secondary sensor during a time window when detection of an object has ended and it is unlikely that a second object will have entered the proximity sensor's field of view.

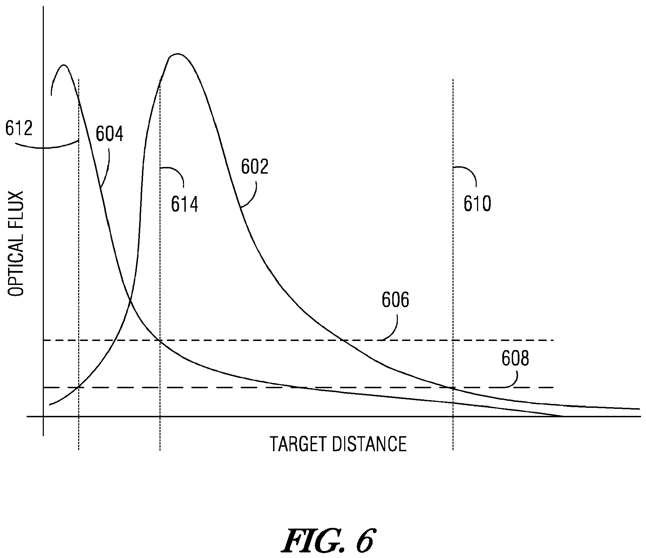

FIG. 6 is a graph depicting performance of a proximity sensor, including a primary photosensor and corresponding optical system, and a secondary photosensor and corresponding optical system, to reflected illumination light from objects at various distances according to some embodiments of the present invention. Curve 602 represents the primary photosensor's performance. Notably, the optical flux at the primary photosensor drops off rapidly at the close target distances. Threshold 608 corresponds to the primary photosensor. At close distance 612, the optical flux to the primary photosensor drops below the corresponding threshold, meaning that the primary photosensor is not sensitive enough to detect objects at those close ranges. At distance 610, the primary photosensor loses sensitivity due to weakening of the reflected signal strength at distance. Therefore, the range of distances between distances 610 and 612 represents the detection range of the primary photosensor.

Curve 604 represents performance of a secondary photosensor arranged in accordance with the embodiments described above. Detection threshold 606 corresponds to the secondary photosensor. Notably, at distances below distance 614, the secondary photosensor receives optical flux above the corresponding threshold 606, meaning that the secondary photosensor is able to detect the presence of objects in the near zone.

While the disclosure is susceptible to various modifications and alternative forms, specific embodiments have been shown by way of example in the drawings and have been described in detail herein. However, the disclosure is not limited to the particular forms disclosed. Rather, the disclosure is to cover all modifications, equivalents, and alternatives falling within the scope of the following appended claims and their legal equivalents.

Persons of ordinary skill in the relevant arts will recognize that the invention may comprise fewer features than illustrated in any individual embodiment described above. The embodiments described herein are not meant to be an exhaustive presentation of the ways in which the various features of the invention may be combined. Accordingly, the embodiments are not mutually exclusive combinations of features; rather, the invention may comprise a combination of different individual features selected from different individual embodiments, as will be understood by persons of ordinary skill in the art.

## Claims

1. A proximity sensor comprising:
a triangulating optical arrangement including an illumination source, a primary photosensor spaced apart from the illumination source, and corresponding primary optics arranged to direct light from the illumination source to a target area such that light from the illumination source reflected from an object at the target area is monitored by the primary photosensor and received at a portion of the primary photosensor, wherein that portion of the primary photosensor varies based on the distance between the proximity sensor and the object, and wherein the triangulating optical arrangement has a primary working range above a minimum distance and a blind zone below the minimum distance;
a non-triangulating optical arrangement including a secondary photosensor and corresponding secondary optics directed at the target area such that the light from the illumination source reflected from the object in at least a portion of the target area is monitored by the secondary photosensor, wherein the non-triangulating optical arrangement has a secondary working range that includes at least a portion of the blind zone.

2. The proximity sensor of claim 1, further comprising:
controller circuitry interfaced with the illumination source and with the first and the second photosensors, the controller circuitry operative to:
read distance measurement information as measured by the primary photosensor, the distance measurement information corresponding to the target area monitored by the photosensor;
read a detection measurement made by the secondary photosensor;
computationally determine any presence of at least a portion of an object within the primary working range in the target area, wherein the determination of the presence within the primary working range is based on the distance measurement information;
in an absence of any portion of an object within the primary working range in the target area, computationally determine any presence of at least a portion of an object within the secondary working range, wherein the determination of the presence within the secondary working range is based on the detection measurement.

3. The proximity sensor of claim 2, wherein the controller circuitry is further operative to:
computationally determine any presence of an obstruction of the proximity sensor based on the detection measurement, and/or
computationally determine a property of the object based on a combination of the distance measurement information and on the detection measurement.

4. The proximity sensor of any one of the previous claims, wherein the secondary working range includes the entire blind zone.

5. The proximity sensor of any one of the previous claims, wherein the secondary optics include a light guide.

6. The proximity sensor of claim 5, wherein the light guide comprises an entry surface having an angled surface oriented at a predefined inclination to the optical axis.

7. The proximity sensor of any one of the previous claims, wherein the primary photosensor is spaced apart from the illumination source by a spacing distance, and wherein the secondary photosensor is situated within the spacing distance.

8. The proximity sensor of any one of the previous claims, wherein the primary photosensor comprises a set of position-sensitive photoelectric elements, and wherein the secondary photosensor is a non-position-sensitive photosensor.

9. The proximity sensor of any one of the previous claims, wherein the primary optics are integrally formed with the secondary optics.

10. The proximity sensor of any one of the previous claims, wherein the illumination source, the primary photosensor, and the secondary photosensor are assembled as a unitary module.

11. A method for operating a proximity sensor, the method comprising:
directing light, by a triangulating optical arrangement, from an illumination source to a target area such that light from the illumination source is reflected from an object at the target area;
monitoring the target area by a primary photosensor that is spaced apart from the illumination source, wherein the primary photosensor has a primary working range above a minimum distance and a blind zone below the minimum distance; and
monitoring the target area by a non-triangulating optical arrangement including a secondary photosensor and corresponding secondary optics directed at the target area such that the light from the illumination source reflected from the object in at least a portion of the blind zone area is monitored by the secondary photosensor.

12. The method of claim 11, further comprising:
reading distance measurement information as measured by the primary photosensor, the distance measurement information corresponding to the target area monitored by the photosensor;
reading a detection measurement made by the secondary photosensor;
computationally determining any presence of at least a portion of an object within a primary working range in the target area, wherein the determining of the presence within the primary working range is based on the distance measurement information;
in an absence of any portion of an object within the primary working range in the target area, computationally determining any presence of at least a portion of an object within a secondary working range that includes the blind zone, wherein the determination of the presence within the secondary working range is based on the detection measurement.

13. The method of claim 12, further comprising:
computationally determining any presence of an obstruction of the proximity sensor based on the detection measurement, and/or
computationally determining a property of the object based on a combination of the distance measurement information and on the detection measurement.

14. The method of any one of claims 11 to 13, wherein monitoring the target area by the non-triangulating optical arrangement includes guiding the light from the illumination source that is reflected from the object at the target area to the secondary photosensor by a light pipe and/or monitoring the entire blind zone.

15. A proximity sensor, comprising:
means for directing light from an illumination source to a target area such that light from the illumination source is reflected from an object at the target area;
means for monitoring the target area by a primary photosensor that is spaced apart from the illumination source, wherein the primary photosensor has a primary working range above a minimum distance and a blind zone below the minimum distance; and
means for monitoring the target area by a secondary photosensor arranged such that the light from the illumination source reflected from the object in at least a portion of the blind zone area is monitored by the secondary photosensor.
